# EUROPEAN PATENT APPLICATION

(11) **EP 1 936 622 A2**
(43) Date of publication of application: **25.06.2008**
(21) Application number: 07024606.1
(22) Date of filing: 19.12.2007
(51) Int. Cl.: G11B 27/034, H04N 5/00, H04N 5/76

(54) **Remote control of media content delivery to a digital media recorder**

(30) Priority: 21.12.2006 US 614206
(71) Applicant: Nortel Networks Limited, St Laurent, Québec H4S 2A9 (CA)
(72) Inventor: Sylvain, Dany, Quebec J8T 6A6 (CA)
(74) Representative: Boyce, Conor

(57) **Abstract**

The present invention allows a user to select media content for delivery via the Internet to a digital media recorder from any number of media content servers, which may support an unlimited amount of media content. To afford such control, a computing terminal, which is separate from the digital media recorder, runs a browser application that allows the user to access the media content server or an associated media access server, browse available media content, and select media content for delivery to the digital media recorder. Once selected, the media content is delivered from the media content server to the digital media recorder, which will store the media content for subsequent playback.

## Description

### Field of the Invention

The present invention relates to media content delivery, and in particular to allowing a user to use a computing terminal to select media content for delivery via the Internet to a digital media recorder from a media content server.

### Background of the Invention

With the evolution of the Internet, the sharing and distribution of music, video, and other media content has become ubiquitous in modern society. Media content is being exchanged and streamed to various types of stationary and portable electronic devices to enable users to take advantage of virtually any type of content at any location. Given the extensive popularity of Apple^{®} Computer's iPod^{®} and other portable media players, a primary focus of the entertainment industry has been on delivering various types of media content to the personal computers and portable media players, and providing accessories for these portable media players. As the capabilities of the personal computers and portable media players evolve and broadband connections to the Internet become readily available, the focus on downloading and streaming relatively small music files transitions into downloading and streaming music videos, video clips, television programs, and movies in addition to music.

Although being able to download or stream a television program or movie to a personal computer or portable media player is often convenient, most consumers would rather view such programming on the larger video monitors or displays provided by their televisions or home theater systems. With the availability of high definition content, these consumers want higher quality video or larger screens than are typically available through personal computers and portable media players. These consumers also want a large selection of programming and want the programming available on their schedules.

The video-on-demand services provided by satellite and cable operators are readily available at the consumer's whim, but generally afford a relatively limited programming selection. The ever-increasing number of programming channels increases the amount of available programming, but being available when the programming is presented as well as determining when and where a particular program will be presented is often difficult.

Digital media recorders allow time-shifting, wherein select programs are recorded when broadcast and viewed at a later time. Although this provides greater selection than video-on-demand services, the selection provided by regular programming is still limited. Further, the standard interface provided by digital video recorders makes searching for a program to record relatively inefficient and difficult. As a result, some digital video recorders can be controlled by a computer to provide a more user-friendly interface when searching for programs to record; however, the selection remains limited.

As such, there is a need for a way to greatly increase the amount of media content available to consumers and their digital video recorders. There is a further need for a way to more efficiently search and select media content for delivery to consumers and their digital video recorders.

### Summary of the Invention

The present invention allows a user to select media content for delivery via the Internet to a digital media recorder from any number of media content servers, which may support an unlimited amount of media content. To afford such control, a computing terminal, which is separate from the digital media recorder, runs a browser application that allows the user to access the media content server or an associated media access server, browse available media content, and select media content for delivery to the digital media recorder. Once selected, the media content is delivered from the media content server to the digital media recorder, which will store the media content for subsequent playback. In one embodiment, the computing terminal accesses the media content server or the media access server through the digital media recorder. As such, information for the browsing and selection session is essentially passed through the digital media recorder. In another embodiment, the computing terminal directly interacts with the media access server, which will instruct the media content server to deliver the media content to the digital media recorder. In this embodiment, information for the browsing and selection session is not passed through the digital media recorder.

By employing a separate computing terminal to select media content for delivery to the digital media recorder, a more efficient, flexible, and feature rich browsing and selection process is provided. The present invention is particularly beneficial when the digital media recorder is a digital video recorder that supports cable, over-the-air, or satellite television services. As a digital video recorder, programs received via the various television services may be recorded along with the media content provided from digital media servers and played back to the user at any time. The programs as well as the media content may also be provided to the user in real time. In one embodiment, the media content includes music or video content associated with music or television programs; however, those skilled in the art will recognize that the media content may take other forms.

The present invention also affords service providers and advertisers an opportunity to deliver targeted advertising to users. Different advertising may be provided to different users or to users with different media content. Further, various advertising control options are made available to the service providers, advertisers, and users, as will be discussed in greater detail below.

### Brief Description of the Drawing Figures

The accompanying drawing figures incorporated in and forming a part of this specification illustrate several aspects of the invention, and together with the description serve to explain the principles of the invention.
FIGURE 1 is a block representation of a communication environment according to a first embodiment of the present invention.
FIGURES 2A and 2B depict a communication flow diagram illustrating a first scenario according to the first embodiment of the present invention.
FIGURES 3A and 3B depict a communication flow diagram illustrating a second scenario according to the first embodiment of the present invention.
FIGURE 4 is a block representation of a communication environment according to a second embodiment of the present invention.
FIGURES 5A and 5B depict a communication flow diagram illustrating a scenario according to the second embodiment of the present invention.
FIGURE 6 is a block representation of a digital media recorder according to one embodiment of the present invention.
FIGURE 7 is a block representation of a media content server according to one embodiment of the present invention.
FIGURE 8 is a block representation of a media access server according to one embodiment of the present invention.

### Detailed Description of the Preferred Embodiments

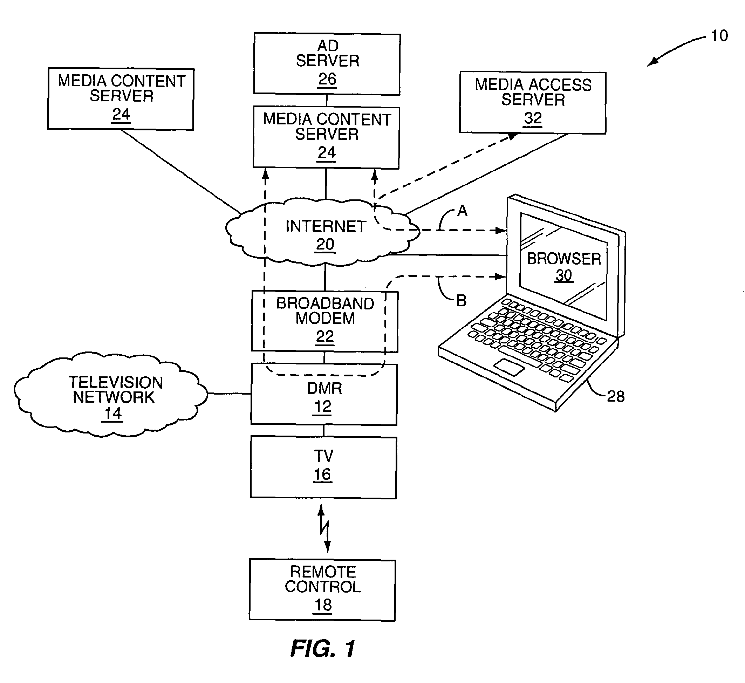

Before delving into the details of the present invention, an overview of a communication environment in which the present invention may be employed is provided. Turning now to Figure 1, a block representation of a communication environment 10 is provided according to a first embodiment of the present invention. A digital media recorder (DMR) 12, such as a digital video recorder or personal video recorder, is provided at a customer premise and is configured to receive television services through an over-the-air, cable, satellite, IPTV, or like television network 14. The DMR 12 is configured to provide set-top box functionality to allow various programming received via the television network 14 to be provided in real time to a television (TV) 16 or like media monitor, as well as record television content for subsequent playback through the TV 16. The DMR 12 as well as the TV 16 may be controlled by a wireless remote control 18.

In addition to being able to receive content over a television network 14, the DMR 12 is also configured to access the Internet 20 through an appropriate broadband modem 22. Broadband access to the Internet 20 may be provided via the television network 14 or a separate access network, which may include a digital subscriber line or cable modem. If broadband access to the Internet 20 is provided via the television network 14, such as in a cable network configuration, television services and Internet services are generally provided through different access mechanisms.

For the present invention, the DMR 12 is able to receive and store media content for subsequent delivery to a user from any number of media content servers 24. The media content may include advertisements (ads), or may be associated with ads provided by an ad server 26, which is capable of cooperating with the video content servers 24 to provide ads within or associated with the media content. The media content may be delivered with the ads incorporated therein, or the ads may be delivered apart from the media content, wherein the DMR 12 may be configured to control delivery of ads in association with the playback of the media content.

The present invention allows a computing terminal 28 having an appropriate browser application 30 to remotely control the delivery of media content from the video content servers 24 to the DMR 12. The computing terminal 28, which may take the form of a personal computer, cellular telephone, or personal digital assistant, provides extensive and flexible display and input capabilities to allow a user to readily interact with the media content servers 24 to view media content that is available for download, as well as select media content to download. In addition to viewing and selecting media content, other authorization, authentication, accounting, and billing functions may also be provided. In certain embodiments, a media access server 32 may be provided to act as a liaison between the user and the media content servers 24. In such an embodiment, the computing terminal 28 may interact directly with the media access server 32, which will control the media content server 24 to effect delivery of selected media content to the DMR 12. The dashed line referenced as "A" illustrates direct interaction between the computing terminal 28 and the media content server 24, as well as the media access server 32.

In another embodiment, the computing terminal 28 will communicate with the media access server 32 or a media content server 24 through the DMR 12, such that the DMR 12 effectively passes communications through between the media access server 32 or media content server 24 and the computing terminal 28 from which remote control of downloading is provided. The communication path between a media content server 24 and the computing terminal 28 through the DMR 12 is referenced as "B."

With the present invention, a web portal is provided by either the media access server 32 or the media content server 24 and is accessible by the computing terminal 28, which is separate from the DMR 12. Given the extensive input and display capabilities of the computing terminal 28, a more user-friendly and feature rich media selection interface may be afforded to the user. In one embodiment, the web portal effectively provides web pages to the computing terminal 28 using an appropriate markup language, and users are able to select various links within these web pages to facilitate browsing, selection, authentication, and billing functions associated with downloading media content to the DMR 12 via the Internet 20. When the computing terminal 28 interacts with the media access server 32 or the media content server 24 via the DMR 12, the DMR 12 will effectively provide a browser that is remotely controlled by the computing terminal 28. Operation is best illustrated through an example.

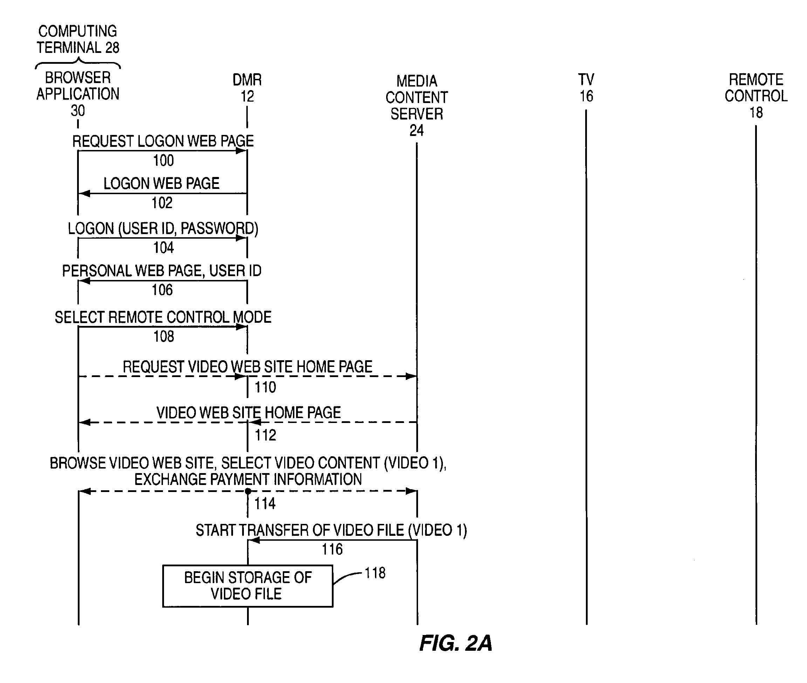

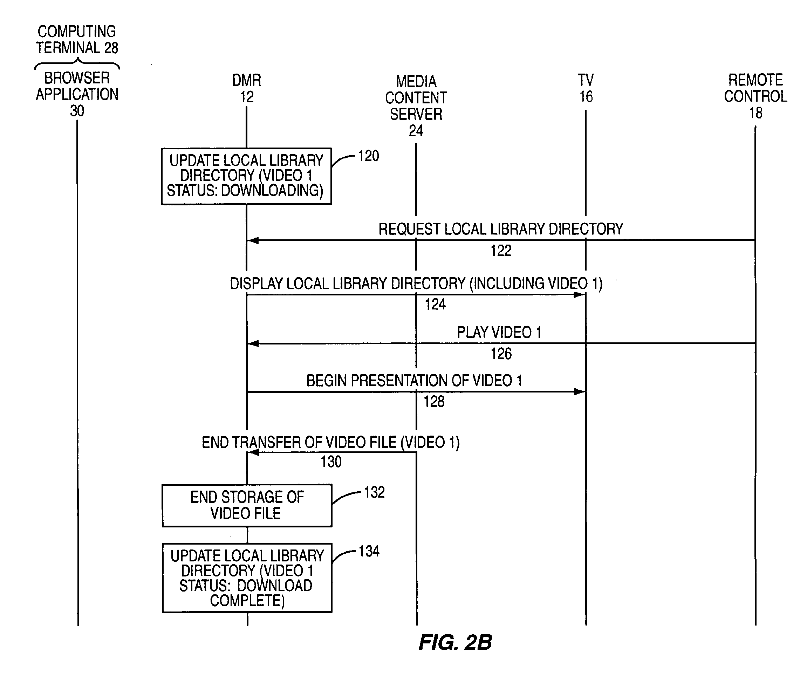

With reference to Figures 2A and 2B, a first communication flow is illustrated wherein media content is delivered to the DMR 12 without supplemental advertising provided by the ad server 26. Assume that the media content is video content that is part of a paid subscription service. Interaction between a media content server 24 and the browser application 30 of the computing terminal 28 is provided via the DMR 12.

Initially, the browser application 30 of the computing terminal 28 may logon to the remote download application of the DMR 12. As such, the browser application 30 may send a request for the logon page for the remote download service to the DMR 12 (step 100). The DMR 12 will respond by providing the logon web page to the browser application 30 (step 102). The computing terminal 28 will display the logon web page to the user, who may provide logon information, such as a user ID and a password necessary to gain access to the remote download service (step 104). The DMR 12 will authenticate the user ID and password provided by the user, and if authenticated, the DMR 12 may provide a personal web page for the user to the browser application 30 (step 106). The personal web page may provide various options and information to the user. One of these options may correspond to the remote control mode associated with remotely controlling the downloading of media content from the media content server 24 to the DMR 12. Assuming the user selects the remote control mode, the browser application 30 will provide information indicating that the user has selected the remote control mode to the DMR 12 (step 108). The DMR 12 will respond by going into a pass-through mode to allow requests from the browser application 30 to be relayed to the media content server 24 and information from the media content server 24 to be passed to the browser application 30 of the computing terminal 28.

Once the remote control mode is configured, the browser application 30 may request the video web site home page of the media content server 24 (step 110). Notably, the request is sent from the browser application 30 to the DMR 12, which will forward it to the media content server 24. In response, the media content server 24 will provide the video web site home page to the DMR 12, which will forward it to the browser application 30 (step 112). The video web site home page may identify available media content for downloading, or links to other web pages from which media content may be selected for download. Accordingly, the user may interact with the media content server 24 via the browser application 30 to browse the video web site, select video content (VIDEO 1), and exchange payment information if required (step 114). Again, the information exchanged between the browser application 30 and the media content server 24 is relayed through the DMR 12.

Assume that media content was selected, and the selected media content corresponds to VIDEO 1. At this point, the media content server 24 may start transferring or streaming a video file for VIDEO 1 to the DMR 12 over the Internet 20 (step 116). As information for the transfer is received by the DMR 12, the DMR 12 will begin storing the video file (step 118) and update a local library directory, which keeps track of media content stored on the DMR 12 (step 120). In this instance, VIDEO 1 will be added to the local library directory, and the status associated with VIDEO 1 may indicate that it is currently being downloaded. Depending on the size of the media content being downloaded, and the transfer rate supported by the Internet 20 and the access network to the DMR 12, downloading times will vary. While the media content is being downloaded, assume that the user decides to watch television, and uses the remote control 18 to request the DMR 12 to display the local library directory (step 122). The DMR 12 will retrieve the local library directory and display the local library directory to the user via the television 16 (step 124). The local library directory will include the media content associated with VIDEO 1, and perhaps the status of the media content, which in this case is currently being downloaded.

The display of the local library directory may provide an option for the user to begin playback of the media content being downloaded. Assuming the user uses the remote control 18 to requests playback for VIDEO 1 (step 126), the DMR 12 will begin presentation of VIDEO 1 to the television 16 (step 128). As such, the DMR 12 may be downloading the particular media content at the same time an earlier portion of the media content is being played back to the user. Assume that during playback of VIDEO 1, downloading or transfer of the video file for VIDEO 1 comes to an end (step 130). The DMR 12 will end storage of the video file (step 132) and update the local library directory to indicate that downloading of the video file VIDEO 1 is completed (step 134).

In operation, the DMR 12 may have a local browser that is effectively controlled by the browser application 30 of the computing terminal 28. Since the DMR 12 may be controlled remotely by the computing terminal 28, access to any video or media content web site using the DMR 12 as a virtual browser under the control of the computing terminal 28 is possible. In an alternative embodiment, the computing terminal 28 may instruct the media content server 24 to download media content to the DMR 12 without using the DMR 12 as a liaison for the exchange of information between the computing terminal 28 and the media content server 24.

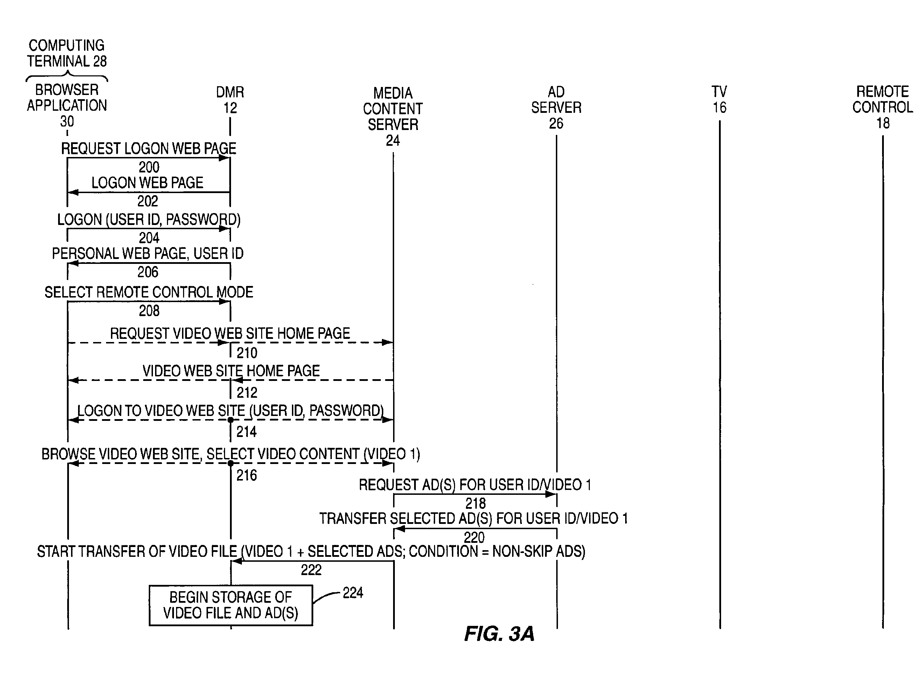

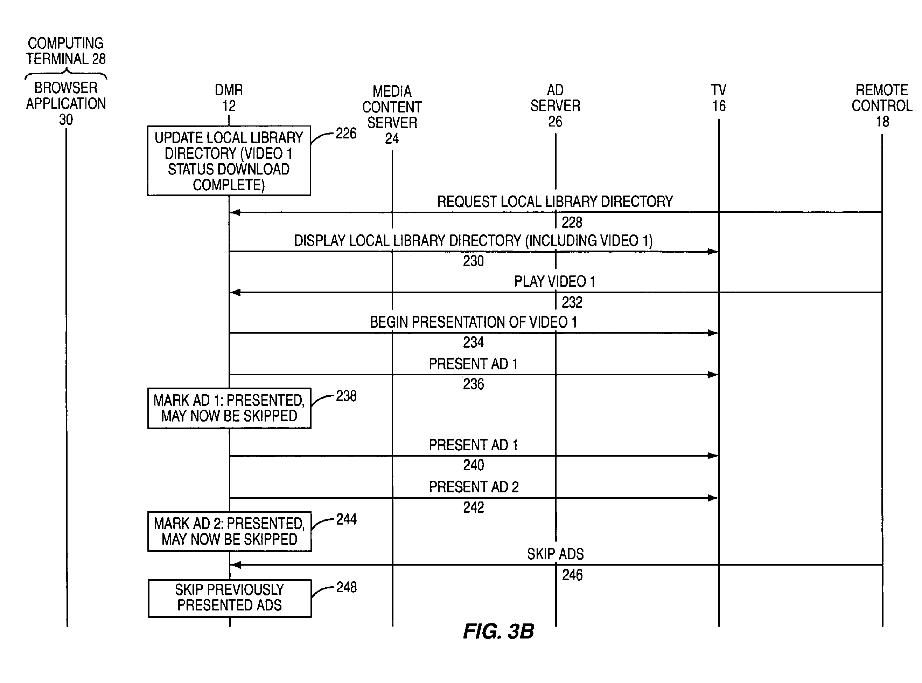

Turning now to Figures 3A and 3B, another example is provided. In this instance, customized ads are inserted into the media content based on a user profile or preferences provided by a service provider or the user. Initially, the browser application 30 of the computing terminal 28 may logon to the remote download application of the DMR 12. As such, the browser application 30 may send a request for the logon page for the remote download service to the DMR 12 (step 200). The DMR 12 will respond by providing the logon web page to the browser application 30 (step 202). The computing terminal 28 will display the logon web page to the user, who may provide logon information, such as a user ID and a password necessary to gain access to the remote download service (step 204). The DMR 12 will authenticate the user ID and password provided by the user, and if authenticated, the DMR 12 may provide a personal web page for the user to the browser application 30 (step 206). The personal web page may provide various options and information to the user. One of these options may correspond to the remote control mode associated with remotely controlling the downloading of media content from the media content server 24 to the DMR 12. Assuming the user selects the remote control mode, the browser application 30 will provide information indicating that the user has selected the remote control mode to the DMR 12 (step 208).

Once the remote control mode is configured, the browser application 30 may request the video web site home page for the media content server 24 (step 210). Again, the request is sent from the browser application 30 to the DMR 12, which will forward it to the media content server 24. In response, the media content server 24 will provide the video web site home page to the DMR 12, which will forward it to the browser application 30 (step 212). In this example, the video web site home page requires the user to logon to the video web site by providing a user ID and password, which may be the same as the user ID and password required to log into the DMR 12, or may be unique to the media content server 24. As such, an exchange between the user and the media content server 24 via the browser application 30 and the DMR 12 is provided to facilitate a logon procedure (step 214). After logging on to the media content server 24, the user may browse the video web site and select video content (step 216). This process may range from selecting a link on a single page, or navigating through any number of pages to arrive at and select the video content associated with VIDEO 1.

Once the media content (VIDEO 1) has been selected, the media content server 24 may request ads from the ad server 26 (step 218). The selection of ads may be based on various criteria, including the user ID associated with the user, the particular media content (VIDEO 1), or any other criteria used to provide targeted or non-targeted advertising in association with delivery of the particular media content. Once selected, the ad server 26 will transfer the selected ads to the media content server 24 (step 220). The media content server 24 may effectively insert the ads into the selected media content (VIDEO 1) or keep the media content and the ads separate. In either embodiment, the media content server 24 will start the transfer of the video file for VIDEO 1 and the selected ads to the DMR 12 (step 222). In this instance, the media content server 24 may provide instructions to the DMR 12 to control presentation of the ads to the user when the media content (VIDEO 1) is subsequently presented to the user. For example, such control may include preventing the user from skipping or fast-forwarding through the ads, requiring the user to view one or more ads at least once before being able to skip subsequent ads, or paying a fee to automatically skip all of the ads. Other options may include allowing the user to watch all of the ads before presenting an uninterrupted playback of the media content (VIDEO 1). For additional information pertaining to controlling when and how advertisements are handled during playback of media content, attention is directed to commonly assigned U.S. application serial number 11/531,993 filed September 14, 2006.

As the video file is downloaded, the DMR 12 will begin storage of the video file and the selected ads (step 224), and update the local library directory to indicate that VIDEO 1 is being downloaded. In this example, assume that the entire media content (VIDEO 1) is downloaded, and the local library directory is updated to indicate that the VIDEO 1 is fully downloaded (step 226) prior to any interaction by the user. Again, assume that the user uses the remote control 18 to request presentation of the contents of the local library directory to the DMR 12 (step 228). The DMR 12 will respond by displaying the contents of the local library directory (step 230). The user may select the media content (VIDEO 1) for playback (step 232), and the DMR 12 will begin presentation of the media content (VIDEO 1) to the television 16 (step 234).

During presentation of VIDEO 1, assume that a first ad (AD 1) is presented (step 236). Once the first ad is presented, the DMR 12 may recognize that the first ad has been presented, and now may be skipped upon request by the user (step 238). As presentation of VIDEO 1 continues, other advertisements including the first ad (AD 1) may be presented again to the user (step 240). Further, if a second ad (AD 2) is presented during presentation of VIDEO 1 (step 242), the DMR 12 may indicate that the second ad (AD 2) is presented and may now be skipped upon request by the user (step 244). At this point, assume that the user uses the remove control 18 to send a request to the DMR 12 to skip ads during presentation of VIDEO 1 (step 246). The DMR 12 will respond to the request by skipping previously presented ads during presentation of VIDEO 1 (step 248). As such, the first and second ads (AD 1 and AD 2) may be automatically recognized and skipped during presentation of the media content (VIDEO 1). However, ads other than the first and second ads may need to be presented to the user at least once and then skipped after initial presentation.

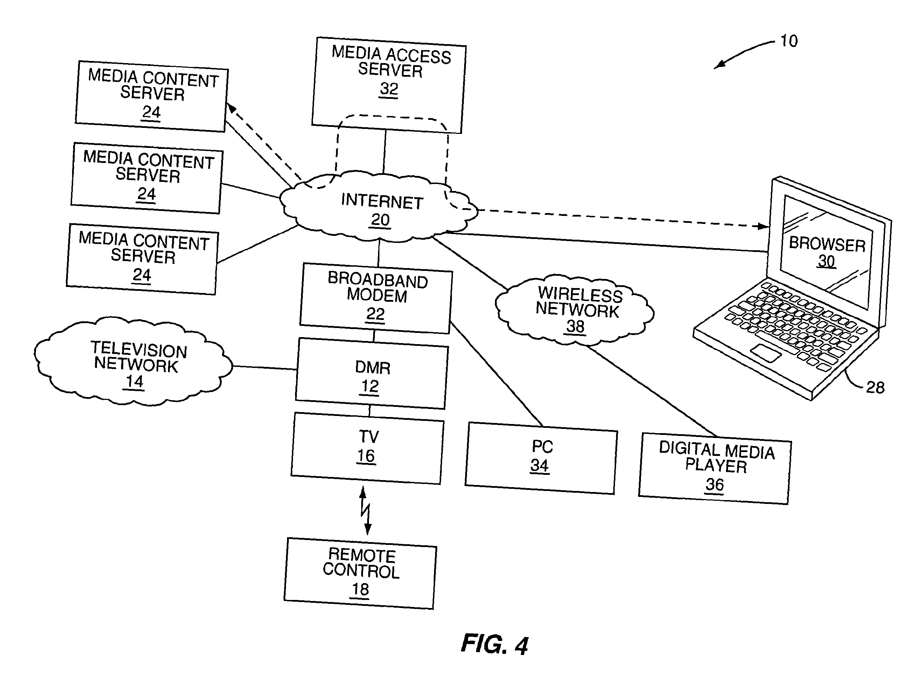

Turning now to Figure 4, another communication environment 10 is illustrated, wherein the media access server 32 is used as a liaison between the computing terminal 28 and the media content servers 24. The dashed line illustrates the functional control path to allow the computing terminal 28 to effectively control the downloading of media content to the DMR 12. Also illustrated in Figure 4 are a personal computer (PC) 34 and a digital media player 36. The PC 34 is shown as being coupled to the broadband modem 22, but also serves the DMR 12, while the digital media player 36 is supported through a wireless network 38, which affords communications between the digital media player 36 and the Internet 20. Those skilled in the art will recognize other access techniques for the PC 34 and the digital media player 36 to facilitate communications with the Internet 20.

In this embodiment, the media access server 32 is capable of maintaining secure connections with multiple user devices, including the DMR 12, the PC 34, and the digital media player 36. The media access server 32 also acts as a central service point for the multiple media content servers 24, such that the computing terminal 28 need only to interact with the media access server 32 to gain access to the media content on the various media content servers 24. The media access server 32 may effect delivery of selected media content to the user devices, including the DMR 12, PC 34, and digital media player 36, directly or indirectly. In one embodiment, media content files are transferred from the video content server 24 to any of the user devices through the media access server 32. In such an embodiment, the media access server 32 may use various encryption, compression, and encoding techniques, depending on the user device to which the file is to be transferred.

For example, the media content servers 24 may contain high definition content, which when requested is presented to the media access server 32, which may deliver the high definition content to the DMR 12 and the PC 34 without further compression. For delivery to the digital media player 36, the media access server 32 may use an encoding format having a very high compression rate to deliver the media content to the digital media player 36. The media access server 32 may also provide resolution translation to effectively convert or downconvert media content as appropriate for storage and presentation at the particular user device. In essence, the media access server 32 may process the media content received from the media content servers 24 in different ways for different user devices.

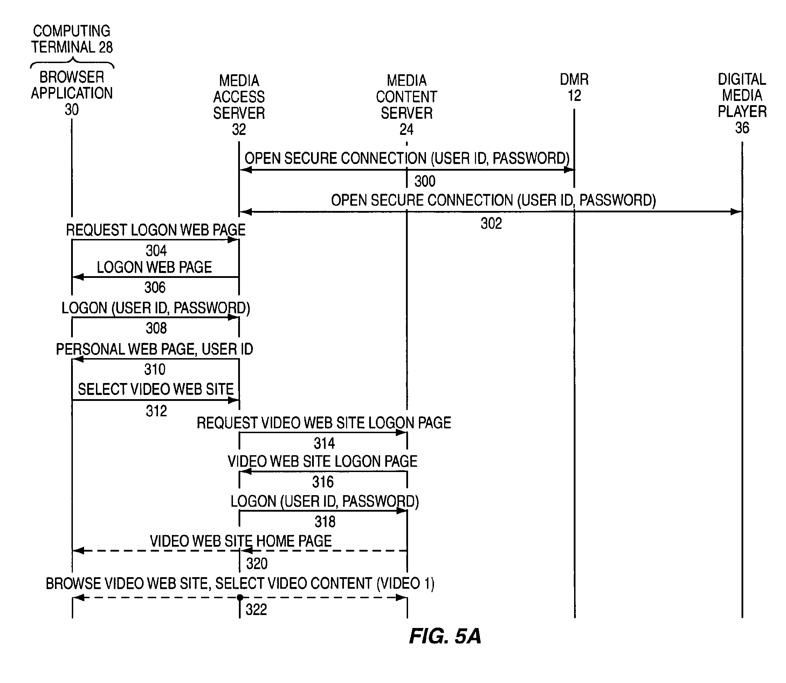

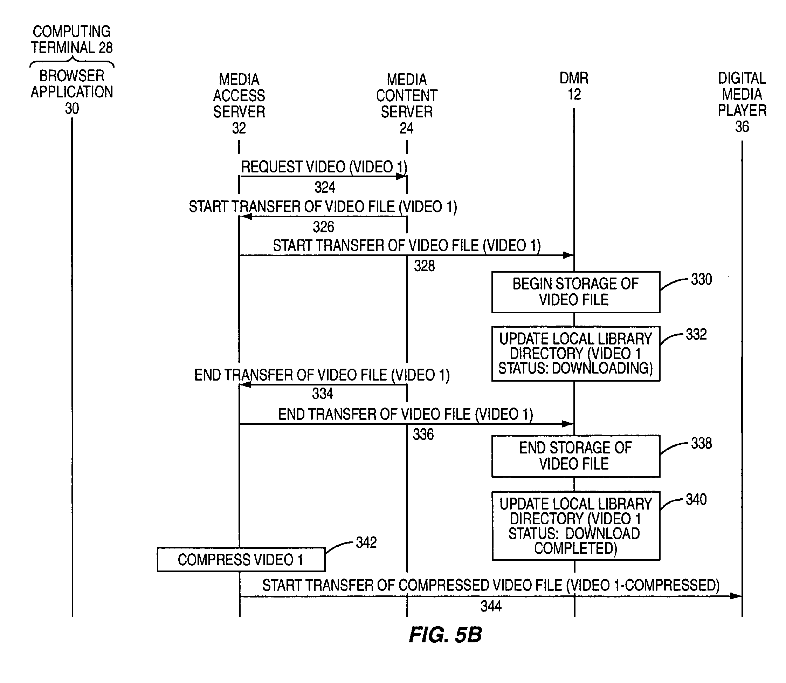

In an alternative embodiment, the media access server 32 may not receive and process the media content prior to delivery to the user devices. Instead, the media access server 32 may establish connections between the media content servers 24 and the DMR 12 or other user device to effect a direct file transfer for the media content to the user devices. As such, the media access server 32 is involved in setting up the connections between the media content servers 24 and the user devices and controlling transfer of the media content, but does not process or relay the actual media content during the transfer. An operational example is provided in the communication flow of Figures 5A and 5B.

Initially, assume that the DMR 12 and the digital media player 36 open secure connections with the media access server 32 (steps 300 and 302). To establish the secure connections, the DMR 12 and the digital media player 36 may be associated with the same or different user IDs and passwords. Once these secure connections are established, the media access server 32 will be able to deliver media content to the DMR 12 and the digital media player 36. Even if the same media content is delivered to the DMR 12 and the digital media player 36, the media access server 32 may take the necessary steps to change compression, encoding, or encryption techniques to facilitate delivery, storage, and playback of the media content at the particular user device.

For remote control of media content delivery, the browser application 30 of the computing terminal 28 may send a request to log in to the media access server 32. In particular, the browser application 30 may request a logon web page of the media access server 32 (step 304). The media access server 32 will respond by providing the logon web page to the browser application 30 (step 306), wherein the user may instruct the browser application 30 to provide the appropriate user ID and password to facilitating logging on to the media access server 32 (step 308). The media access server 32 may use the user ID to identify a personal web page associated with the user, and provide the personal web page to the browser application 30 (step 310).

The personal web page provided by the media access server 32 may support various video web sites provided by the different media content servers 24. Assuming that the user selects a particular video web site, the browser application 30 will provide information to the media access server 32 identifying the selection of a particular video web site (step 312). The media access server 32 will then send a request for the video web site logon page to the corresponding media content server 24 (step 314). The media content server 24 will respond by providing the video web site logon page to the media access server 32 (step 316). The media access server 32 will provide the requisite user ID and password to log on to the media content server 24 (step 318). Again, the user ID and password when logging on to the media content server 24 may be the same or different from those required for logging on to the media access server 32. Assuming the logon procedure is appropriate, the media content server 24 will provide the video web site home page to the media access server 32, which will forward it to the browser application 30 (step 320). At this point, the user may browse the web site of the media content server 24 and select media content (VIDEO 1), wherein the media access server 32 acts as a liaison between the browser application 30 and the media content server 24 (step 322).

The amount of processing done on the information exchanged between the browser application 30 and the media content server 24 may vary from none to substantial. For example, the media access server 32 may simply pass certain requests and web pages along on one end of the spectrum, wherein on the other end of the spectrum, the media access server 32 may completely reformat requests and the responsive web pages.

During this process, the media access server 32 will recognize that media content (VIDEO 1) has been selected from the media content server 24, and as such, will send a request for the media content (VIDEO 1) to the media content server 24 (step 324). In response, the media content server 24 will start transferring the video file for the media content (VIDEO 1) to the media access server 32 (step 326), which will start transferring the file for the media content (VIDEO 1) to the DMR 12 (step 328). The DMR 12 will begin storing the video file (step 330) and update the local library directory as described above (step 332). In this embodiment, the video file for the media content (VIDEO 1) is passed through the media access server 32. At some point, the transfer of the video file for the media content (VIDEO 1) will end (steps 334 and 336), and the DMR 12 will end storage of the video file (step 338) and update the local library directory to indicate that the media content is completely downloaded (step 340). In this example, the video file for the media content (VIDEO 1) was not processed by the media access server 32, but was instead merely passed through to the DMR 12.

Since the digital media player 36 also has a secure connection to the media access server 32, the video file for the media content (VIDEO 1) may also be transferred to the digital media player 36. In this embodiment, the media access server 32 is configured to compress the video file for the media content (VIDEO 1) to a format appropriate for transmission to and storing on the digital media player 36. As such, the media access server 32 may concurrently or subsequently compress the video file for the media content (VIDEO 1) (step 342) and transfer the compressed video file for the media content to the digital media player 36 (step 344).

The instructions provided to the media access server 32 by the browser application 30 may dictate when, where, and how to download media content to the various user devices. Although the video file for the media content (VIDEO 1) was transferred to the DMR 12 and the digital media player 36 via the media access server 32, files may be transferred directly from the media content server 24 to these user devices. The media content server 24 may provide different encryption, compression, or encoding techniques for the media content prior to delivery to the respective user devices, or different media content servers 24 may provide different levels of compression, and the media access server 32 will select the appropriate media content server 24 to use for delivering media content to the various user devices.

In any of the above embodiments, downloading may be afforded different quality of service levels, based on subscription or service plans. The ability to select and download ads based on service provider or user preferences and profiles makes ads more pertinent to the viewer from an advertiser or viewer perspective. As such, ads selected based on user preferences or profiles may be less likely to be skipped, since the viewer has already indicated an interest in certain ads or associated goods or services. For targeted or generic ads, controlling how these ads are handled at the DMR 12 provides the opportunity for advertisers and users to compromise with regard to fast-forwarding through or skipping ads during presentation of an associated program. Providing and controlling ad delivery may be implemented in all of the embodiments of the present invention. To the extent that the user may control the selection and delivery of ads, such control may be provided remotely by the user via the browser application 30 of the computing terminal 28. Additional control may be provided during presentation or playback of the media content at the DMR 12.

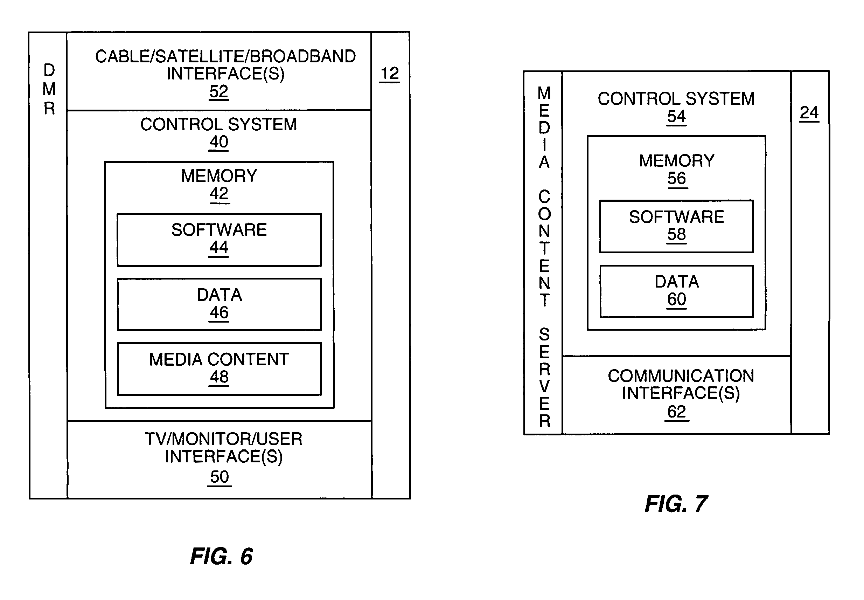

With reference to Figure 6, a block representation of a DMR 12 is illustrated. The DMR 12 may include a control system 40 having sufficient memory 42 for the requisite software 44 and data 46 to operate as described above. The memory 42 may also include media content 48, which was recorded via the television network 14, other media delivery network, or via the Internet 20, as described above. The control system 40 is associated with one or more TV/monitor/user interfaces 50 to facilitate interaction with the TV 16, an audio system, or other multimedia system to facilitate delivery of media to a user and to receive input from the user. The user interface 50 may include a remote control port capable of receiving commands from the remote control 18, as well as a keypad and display for receiving information from the user as well as providing information to the user. The control system 40 is also associated with one or more cable, satellite, broadband, or like interfaces 52 to facilitate communications over the television network 14, other media network, or the Internet 20.

Figure 7 is a block representation of a media content server 24. The media content server 24 may include a control system 54 having sufficient memory 56 for the requisite software 58 and data 60 to operate as described above. The control system 54 may include one or more communication interfaces 62 to facilitate communications over the Internet 20 with the media access server 32, ad server 26, computing terminal 28, and the DMR 12.

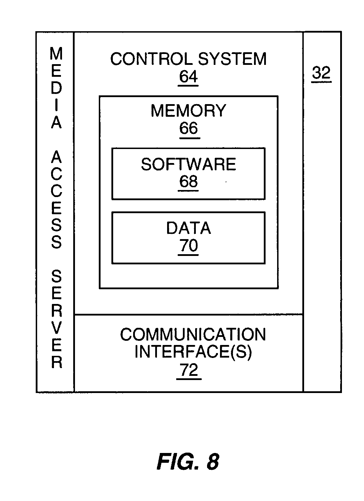

Figure 8 is a block representation of a media access server 32. The media access server 32 may include a control system 64 having sufficient memory 66 for the requisite software 68 and data 70 to operate as described above. The control system 64 may include one or more communication interfaces 72 to facilitate communications over the Internet 20 with the media content server 24, ad server 26, computing terminal 28, and the DMR 12.

## Claims

1. A digital media recorder comprising:
• at least one communication interface adapted to provide access to an Internet and a television service;
• a control system comprising memory and associated with the at least one communication interface, the control system adapted to:
• receive and record television programming via the television service for subsequent playback to a user; and
• receive and record selected media content via the Internet wherein the media content is selected for delivery to the digital media recorder by the user from a computing terminal that is separate from the digital media recorder.

2. The digital media recorder of claim 1 wherein the control system is further adapted to receive at least one user request from the computing terminal and send a request corresponding to the at least one user request to a service via the Internet, wherein the service identifies the selected media content.

3. The digital media recorder of claim 2 wherein the control system is further adapted to receive service information from the service via the Internet and send information corresponding to the service information to the computing terminal for display to the user.

4. The digital media recorder of claim 3 wherein the user request is a browser request received from a browser application running on the computing terminal and the information is a web page.

5. The digital media recorder of claim 1 wherein the selected media content is selected by the user from a service via the Internet for delivery to the digital media recorder, wherein information associated with selecting the selected media content is not passed through the digital media recorder.

6. The digital media recorder of claim 1 wherein the control system is further adapted to:
• receive advertising control information in association with the selected media content, which comprises advertising; and
• control playback of the advertising during playback of the selected media content based on the advertising control information.

7. The digital media recorder of claim 6 wherein the control system is further adapted to control playback of the advertising during playback of the selected media content based on input provided by the user.

8. The digital media recorder of claim 1 wherein the selected media content comprises video content.

9. The digital media recorder of claim 1 wherein the control system is further adapted to:
• receive a request for a local library directory identifying television programs and media content that are stored in the memory, the media content comprising the selected media content;
• provide the local library directory to the user;
• receive instructions to present the selected media content to the user; and
• present the selected media content to the user.

10. A method comprising:
• interacting over an Internet with a computing terminal of a user to identify selected media content for delivery to a digital media recorder associated with the user; and
• effecting delivery of the selected media content via the Internet to the digital media recorder, wherein the digital media recorder is adapted to receive and record television programming via a television service for subsequent playback to the user as well as receive and record the selected media content via the Internet.

11. The method of claim 10 further comprising selecting the selected media content based on interactions with the computing terminal.

12. The method of claim 10 wherein interacting over the Internet with the computing terminal comprises:
• receiving a request from the digital media recorder, the request corresponding to a user request sent to the digital media recorder from the computing terminal corresponding to a request for service information originated from the computing terminal; and
• sending the service information to the digital media recorder, which will deliver corresponding information to the computing terminal for display to the user.

13. The method of claim 12 wherein the user request and the information are exchanged between the digital media recorder and the computing terminal via the Internet.

14. The method of claim 10 wherein interacting over the Internet with the computing terminal does not involve communications with the digital media recorder.

15. The method of claim 10 further comprising delivering to the digital media recorder advertising control information in association with the selected media content, which comprises advertising, the advertising control information adapted to instruct the digital media recorder to control playback of the advertising during playback of the selected media content.

16. The method of claim 10 further comprising selecting advertising based on at least one of: the user, a user profile and the selected media content, and delivering the advertising within or in association with the selected media content to the digital media recorder.

17. The method of claim 10 wherein identification of the selected media content is provided by a media access server, which instructs a media content server to deliver the selected media content.
